# FASCICULE DE BREVET EUROPEEN

(11) **EP 0 434 530 B1**
(45) Date de publication et mention de la délivrance du brevet: **18.05.1994**
(21) Numéro de dépôt: 90403608.4
(22) Date de dépôt: 14.12.1990
(51) Int. Cl.: G02B 6/44

(54) **Dispositif de stockage de fibres optiques, notamment pour coffret de brassage**
Speichervorrichtung für Lichtwellenleiter in einem Verteilerschrank
Storage device for optical fibres more particularly for a distributing box

(30) Priorité: 19.12.1989 FR 8916814
(43) Date de publication de la demande: 26.06.1991
(73) Titulaire: MARS-ACTEL Société Anonyme dite:, 08330 Vrigne-aux-Bois (FR)
(72) Inventeur: Boyer, Jean-Pierre, F-75015 Paris (FR); Dupont, Michel, F-08410 Boulzicourt (FR)
(74) Mandataire: Weinmiller, Jürgen

(56) Documents cités:
- EP-A- 0 341 027
- DE-A- 3 530 625
- DE-U- 8 809 714

## Description

L'invention concerne le stockage des réserves, ou mous, qu'il est nécessaire de laisser aux fibres optiques, par exemple à leurs extrémités pour leur raccordement, en particulier dans les coffrets de brassage où ces fibres aboutissent.

Le brassage des fibres optiques de télécommunications s'effectue souvent dans des coffrets contenant d'une part des dispositifs de raccordement et de brassage, d'autre part des dispositifs de stockage de fibre contenant les réserves nécessaires aux raccordements présents ou futurs et aux modifications de brassage.

Le stockage des réserves de fibres en service s'effectue notamment au moyen de cassettes dans lesquelles les fibres sont partiellement lovées.

Chaque cassette est prévue pour contenir une réserve d'une ou plusieurs boucles pour une ou plusieurs fibres, chaque réserve est extractible par traction sur l'une au moins des parties, sortant de la cassette, de la fibre à laquelle elle appartient.

La réserve maximale, pour une fibre dans une cassette, est obtenue lorsque le déploiement de la ou des boucles qui la composent est maximal, les tractions sur la fibre depuis l'extérieur de la cassette tendant à réduire ce déploiement et par conséquent la réserve disponible.

La réintroduction d'une portion d'une réserve de fibre à l'intérieur d'une cassette, après traction sur la fibre, est généralement difficile à réaliser lorsqu'elle doit s'effectuer par simple poussée axiale de réintroduction sur la portion sortie de fibre.

En effet, la reconstitution des boucles, à leur plein déploiement, à l'intérieur d'une cassette s'effectue souvent incorrectement, lorsqu'il n'est pas possible d'intervenir directement à l'intérieur de la cassette pour réarranger les fibres.

Or, dans de nombreux coffrets, les cassettes de stockage sont empilées ou accolées de manière déterminée et ne permettent pas les interventions de réarrangement qui seraient souhaitables, lorsqu'elles sont elles-mêmes en place.

Dans ces conditions, les réserves stockées dans les cassettes sont parfois insuffisantes, en particulier si la même longueur de réserve d'une fibre est exploitée d'une part pour les opérations d'extraction d'une cassette qui la contient, hors de l'ensemble de cassettes empilées ou accolées dont cette cassette fait partie, et d'autre part lors d'opérations successives de raccordement et/ou de brassage.

La présente invention propose donc un dispositif de stockage partiel de fibres optiques, en particulier pour coffret de brassage, qui soit apte à contenir en réserve des parties de fibres en service, dont il permet l'extraction et la rentrée individuelles.

Selon l'invention, ce dispositif de stockage partiel de fibres optiques est tel que défini à la revendication 1.

L'invention, ses caractéristiques et ses avantages sont précisés dans la description qui suit, en liaison avec les figures répertoriées ci-dessous.

La figure 1 présente un coffret de brassage doté d'un dispositif de stockage selon l'invention, en perspective.

Les figures 2 et 3 présentent respectivement deux coupes, l'une en vue de face et l'autre en vue de gauche d'un casier pour dispositif de stockage selon l'invention.

La figure 4 présente une vue en perspective d'une cassette pour dispositif de stockage selon l'invention.

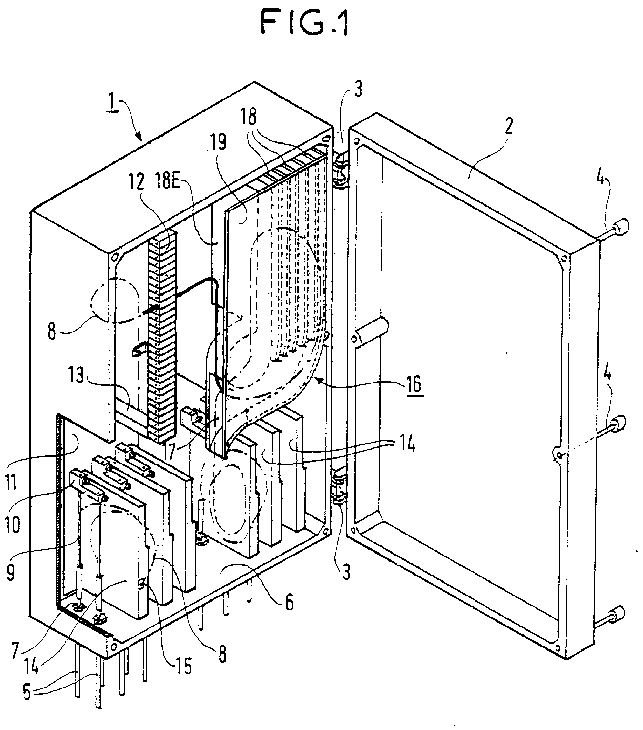

Le dispositif de stockage présenté en figure 1 est montré incorporé dans un coffret de brassage 1, de type armoire murale, fermé par une porte 2 à gonds latéraux 3 et verrouillable à l'aide de vis de fixation 4.

Le coffret de brassage 1 reçoit des câbles optiques 5, ici par sa base 6, ces câbles ayant, de manière connue, non développée ici, des destinations différentes. Les fibres optiques 8 que comportent ces câbles 5 sont classiquement dissociées les unes des autres dans le coffret 1, afin d'être raccordées entre elles selon les dispositions de brassage choisies.

A cet effet, les câbles 5 qui traversent la base 6 du coffret par l'intermédiaire de presse-étoupes 7, sont ouverts de manière à séparer les fibres 8 du brin porteur 9 qui les accompagne, ce dernier étant suspendu par une extrémité à un potence 10 ici fixée sur la paroi de fond 11 du coffret. Chaque potence 10 sert par exemple de support pour deux brins porteurs 9 et comporte à cet effet deux fixations de brin par des vis, dans des conduits parallèles, les vis, directement accessibles au travers de l'ouverture de porte du coffret, étant décalées l'une part rapport à l'autre.

Les raccordements entre fibres 8 s'effectuent par l'intermédiaire de connecteurs 12, ici fixés parallèlement à l'un des côtés verticaux du coffret 1 sur une structure de support 13, ces connecteurs 12 et cette structure 13 n'étant pas développés ici, car ils n'ont pas de rapport direct avec l'invention.

Chaque fibre 8 éventuellement regainée, à ce niveau et jusqu'au connecteur 12 où elle aboutit, traverse une cassette de stockage 14 dans laquelle elle est partiellement lovée afin de former une réserve.

Les cassettes 14, d'allure au moins grossièrement parallélépipédique, sont ici alignées face contre face sur le plancher et le long de la paroi de fond 11 du coffret, étant fixées de manière à être amovibles, par exemple par accrochage ou encliquetage.

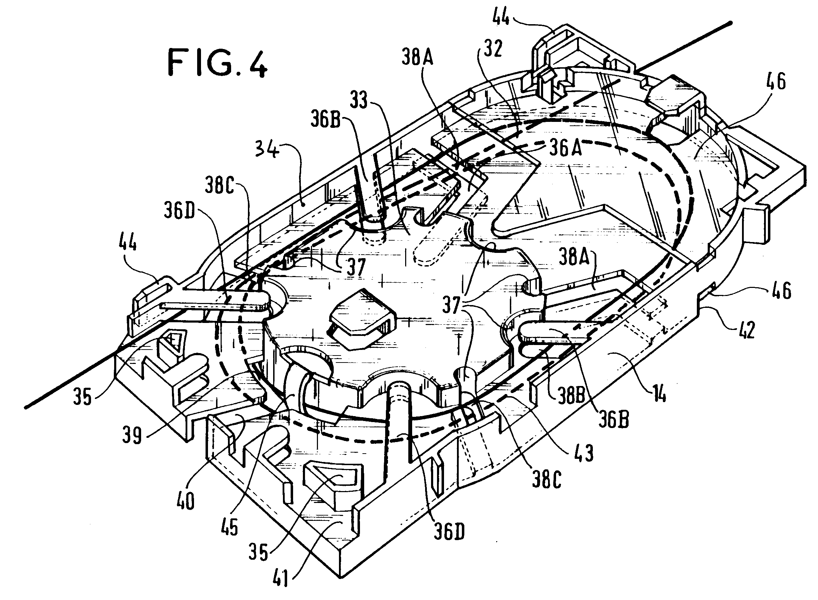

La description d'une de ces cassettes sera précisée plus loin en liaison avec la figure 4.

Dans l'exemple de réalisation proposé, chaque fibre 8 qui est issue d'un câble 5, s'en sépare lorsqu'il est éclaté, au-dessus du presse-étoupe 7 d'où il sort dans le coffret 1; cette fibre pénètre ensuite dans une cassette 14 par un orifice 15 ici montré disposé sur un côté de cassette 14 qui est destiné à être placé à l'avant du coffret et qui est donc directement accessible au travers de l'ouverture de porte du coffret.

La même fibre 8 ressort de la cassette par une embouchure qui s'ouvre vers le plafond de l'armoire lorsque cette cassette est en place dans le coffret. Elle pénètre ensuite dans un casier de stockage 16 qui est commun à au moins une partie des fibres, sinon à la totalité.

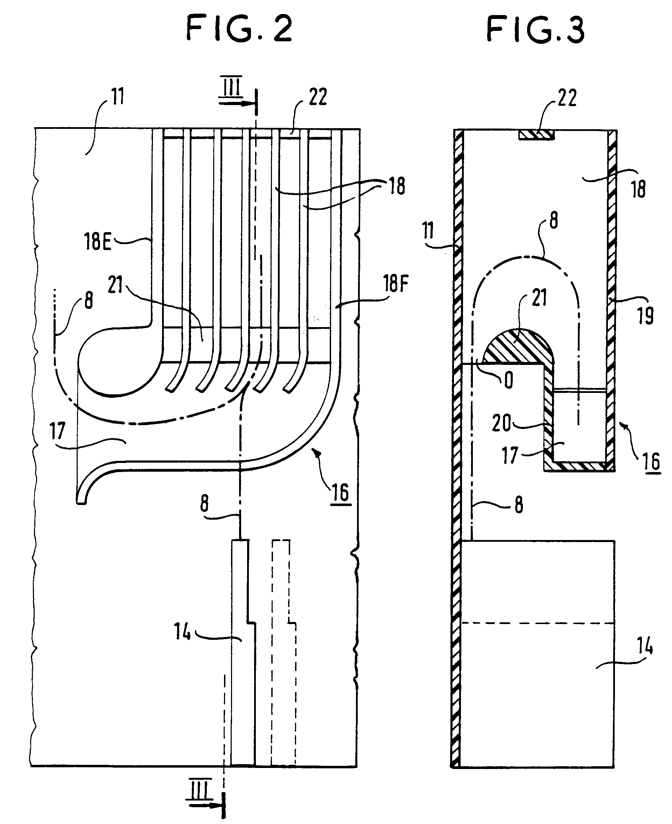

Le casier 16, qui est par exemple réalisé en un matériau moulé, est aussi détaillé sur les figures 2 et 3, il comporte une pluralité de grandes et minces cases parallèles dans chacune desquelles des fibres viennent former chacune une boucle de réserve dont l'un des deux extrémités sort par un passage commun 0 positionné à une extrémité des cases et ici sous ces dernières. Le passage 0 est parallèle à un conduit 17 menant à une ouverture latérale, ici évasée, qui est commune au moins à plusieurs cases et par laquelle sort l'autre extrémité de chacune des boucles stockées dans le casier 16.

Les cases sont ménagées entre des cloisons 18 parallèles dont l'espacement est faible, par exemple dix millimètres pour des cases ayant une longueur de deux cent vingt millimètres et une largeur de cent dix millimètres.

Dans l'exemple proposé, les cloisons 18 sont globalement parallèles aux grandes faces des cassettes 14, au dessus d'au moins une partie desquelles le casier 16 est placé dans le coffret 1, le plafond du casier 16 étant formé par, ou plaqué contre, au moins une partie du plafond du coffret 1.

L'ouverture du conduit 17 est essentiellement délimitée par les deux cloisons 18E et 18F, extrêmes, du casier 16 - figure 2-. L'une de ces deux cloisons extrêmes, 18F, qui vient ici se plaquer contre l'un des deux côtés du coffret 1, se recourbe, dans un premier sens, pour venir former le plancher du conduit passant sous les extrémités courbes, mais plus courtes, des cloisons 18 intermédiaires, puis dans un sens opposé pour former l'ouverture évasée en liaison avec l'extrémité correspondante de l'autre cloison extrême 18E. Cette dernière est ici enroulée sur elle-même dans le premier sens indiqué ci-dessus à cette extrémité correspondante, les rayons de courbure des extrémités des différentes cloisons 18 au niveau de l'embouchure étant choisis en fonction du rayon minimal de courbure R admissible pour les fibres 8.

L'évasement de l'embouchure qui est déterminé par les enroulements opposés des extrémités des cloisons extrêmes est placé latéralement à une extrémité du casier 16 qui est ici située au bas de ce casier dans le coffret 1. Il permet une grande variation d'orientation, à l'intérieur du coffret 1, des deux extrémités des fibres dont les boucles sont stockées dans le casier 16.

La vue en coupe selon III-III de la figure 3 montre que le casier 16 est fermé par deux parois parallèles sur sa face avant et sur sa face arrière. L'une de ces deux parois est par exemple constituée par la paroi de fond 11 du coffret 1, alors que l'autre est une plaque 19, rapportée et préférablement transparente; cette plaque 19 est située du côté de l'ouverture de porte dans le coffret 1, elle couvre le bord correspondant des différentes cloisons 18, de ce côté, et elle est amovible pour permettre une insertion des boucles dans les cases.

La figure 3 montre que le conduit 17 dont le fond est constitué par le prolongement de la cloison extrême 18F sous les autres cloisons, comme décrit ci-dessus, ne s'étend que sur une partie de la largeur du casier 16 en étant limité par un rebord 20 qui s'étend parallèlement à la plaque 19, à approximativement au moins mi-largeur de casier, sur la longueur du conduit 17 et, en hauteur, au-dessus du bas des cloisons 18 intermédiaires, par rapport au fond du conduit.

Le rebord 20 est lui-même longitudinalement bordé par une surépaisseur 21 qui ici est demi-cylindrique et déportée latéralement vers la paroi de fond 11 par rapport au rebord, lorsque le casier 16 est en place dans le coffret 1.

Cette surépaisseur 21 court tout au long du casier 16 et sert à assujettir toutes les cloisons 18, les unes aux autres, en association avec une languette longitudinale 22 courant ici au sommet des cloisons.

La surépaisseur 21 a elle aussi un rayon de courbure qui est fonction du rayon de courbure R admissible pour les fibres et elle borde le passage 0 qui est ménagé entre la paroi de fond 11 du coffret lorsque le casier 16 est en place et elle-même, ainsi qu'on le voit sur la figure 3.

Chaque fibre 8 venant d'une cassette 14, comme montré sur la figure 3, traverse le passage 0 entre la paroi de fond 11 du coffret 1 et le rebord 21 du casier 16, au niveau d'une case dans laquelle elle forme une boucle en U. Elle en ressort sous les cloisons 18 et 18E par l'évasement que forme les cloisons extrêmes 18E et 18F, que borde le rebord 20 et la plaque 19 et qui termine le conduit de l'embouchure 17, comme on le voit sur les figures 2 et 3.

Comme indiqué plus haut, l'orientation d'une fibre 8 à raccorder à l'un des connecteurs 12 peut varier largement, sans inconvénient, en sortie du casier 16, via le conduit 17.

L' extension d'une boucle en U dans une case et par conséquent la réserve de fibre correspondante varie d'une valeur maximale par exemple initiale pour laquelle la boucle s'étend au maximum dans la case à une valeur nulle pour laquelle la boucle de fibre repose sur la surépaisseur semi-cylindrique 21, dans sa case.

Dans la forme de réalisation proposée en figure 1, des cassettes 14 sont associées au casier 16, étant placées à un niveau inférieur du coffret 1 par rapport à ce dernier.

Ces cassettes 14 permettent classiquement de stocker des réserves supplémentaires de fibres 8, notamment en aval des presse-étoupes 7 lorsque les fibres sont regainées à ce niveau, dans le coffret 1.

Un exemple d'une telle cassette 14 est présenté en figure 4, il permet de disposer de deux logements de stockage destinés à recevoir chacun une portion d'au moins une fibre optique dont les deux extrémités sortent de la cassette.

A cet effet, la cassette est dotée d'une structure de séparation qui est ici une paroi 32, médiane, de part et d'autre de laquelle sont ménagés les deux logements de stockage. Il est également possible de réaliser cette structure de séparation sous forme d'une ossature ajourée, non représentée, de part et d'autre de laquelle sont disposés les deux logements de stockage.

Dans la forme de réalisation proposée, chacun de ces deux logements se présente sous la forme d'un conduit d'allure au moins grossièrement annulaire ménagé entre un élément 33, dit limite minimale d'enroulement de boucle, et une bordure périphérique 34, l'un et l'autre en saillie de part et d'autre de la paroi de séparation 32.

L'élément limite 33 est ici constitué par une structure d'allure cylindrique qui s'étend de part et d'autre de la paroi de séparation avec laquelle elle est ici moulée en un seul bloc. L'élément limite 33 est également susceptible d'être réalisé d'une manière différente par exemple sous la forme d'une pluralité de plots disposés au moins grossièrement circulairement de part et d'autre de la paroi de séparation 32, à partir du moment ou il limite, à une valeur minimale prédéterminée, la réduction d'une boucle de fibre qui vient l'enserrer, lorsque la fibre est tirée vers l'extérieur du logement où elle est lovée; cette valeur prédéterminée correspondant par exemple au rayon de courbure minimal admissible pour les fibres à employer.

Chacun des deux conduits ménagés de part et d'autre de la paroi de séparation 32 qui est ici latéralement délimité par la bordure périphérique 34 et par l'élément limite 33 auxquels sont éventuellement associés quelques plots de guidage 35 pour la fibre, est aussi surplombé par des dents 36 de maintien de fibre, telles 36A, 36B, 36C, 36D.

Ces dents 36 sont ici parallèles à la paroi de séparation 32 à un niveau qui correspond au niveau de saillie de la structure cylindrique de part et d'autre de la paroi de séparation. Chaque dent ferme partiellement l'un des conduits qu'elle surplombe entre la bordure périphérique 34 dont elles sont issues et l'élément limite 33, de manière à empêcher une sortie latérale d'une fibre hors de ce conduit.

Dans la réalisation présentée où la cassette comporte un corps moulé, des gorges périphériques 37 sont ménagées dans la structure cylindrique de l'élément limite 33 face aux extrémités libres des dents 36 qui viennent partiellement s'y introduire. De même pour des raisons de moulage, chaque dent 6 est associée à une découpure 38 de même forme qui lui est parallèle dans la paroi de séparation, telles 38A, 38B, 38C, 38D à 36A, 36B, 36C et 36D.

Un passage de fibre est réalisé pour faire communiquer les deux logements d'une cassette, il est ici constitué par une fente 39 ménagée dans la paroi de séparation 32 au ras de la structure cylindrique de l'élément limite 33 d'un côté où cette structure est décentrée longitudinalement vers la bordure périphérique de manière que les conduits soient de largeur plus réduite à ce niveau que de l'autre où les possibilités de déploiement de la fibre sont accrus par l'élargissement important du conduit dans chaque logement.

La fente 39 s'étend sur l'un des trajets possibles de fibre le long de l'élément limite 33, elle assure une immobilisation par coincement de chaque fibre par rapport à la cassette ce qui permet de disposer de deux réserves de fibres, dans les logements, de part et d'autre de la fente pour les deux parties de chaque fibre qui se situent de part et d'autre de cette fente.

Dans la réalisation proposée, une fente 40 est ménagée dans la paroi de séparation 32, elle aboutit transversalement dans la partie médiane de la fente 39 et s'ouvre sur l'extérieur de la cassette pour permettre l'introduction d'une fibre transversalement dans la fente 39 depuis l'extérieur.

L'immobilisation des fibres 8 au niveau de la fente 39 s'effectue par exemple en garnissant les fibres de colliers d'arrêt, non représentés, qui viennent les enserrer et qui ne peuvent traverser la fente 39 en raison de leurs dimensions ou encore par un collier de bridage 45 les fixant à l'élément 33.

Des éléments 46, formant couvercle et ici transparents, sont accolés de part et d'autre de la cassette pour compléter l'obturation des conduits en supplément des dents, notamment au niveau de la partie la plus large des conduits pour éviter qu'une partie de fibre stockée dans les logements ne sorte latéralement hors de la cassette en dehors des embouchures 41, 42, 43 prévues à cet effet.

Les embouchures 41, 42 sont ici ménagées dans la bordure périphérique 34, chacune pour un logement différent, à une extrémité différente de la cassette de part et d'autre de la paroi de séparation 32, au ras de laquelle elles sont situées et le long de laquelle elles s'ouvrent, éventuellement par plusieurs ouvertures ainsi qu'on le voit sur la partie droite de la figure 4 pour l'embouchure 41. L'embouchure 43 est ici constituée par une seule ouverture ménagée dans la bordure périphérique du même côté de la paroi de séparation 32 que l'embouchure 41 et latéralement, entre les deux extrémités où s'ouvrent les embouchures 41, 42 et du côté opposé à celui qui porte des crochets de fixation 44 de la cassette au coffret 1.

L'introduction d'une fibre 8 dans une cassette est préférablement effectuée en poussant la fibre entre les extrémités libres des dents 36 et la structure cylindrique de l'élément limite 33, au niveau des gorges périphériques 37. Cette fibre 8 forme alors préférablement une seule boucle dans chaque logement en y pénétrant par exemple par l'embouchure 43 et en ressortant par l'embouchure 42 après être passée au travers de la paroi de séparation 32 par les fentes 39, 40.

Chaque boucle de fibre 1 est susceptible de prendre une extension maximale dans le conduit d'un logement qui la contient, elle longe alors la bordure périphérique 34 et permet alors d'obtenir une réserve maximale pour la partie de fibre qui la comporte. Une traction, depuis l'extérieur de la cassette, sur cette partie de fibre permet alors d'extraire la portion en réserve au travers de l'embouchure qu'elle traverse, l'extension de la boucle correspondante se réduisant jusqu'au moment où cette boucle est plaquée contre l'élément limite 33. La réintroduction d'une portion de fibre extraite est prévue pour être réalisable par simple poussée sur la fibre dans le sens de réintroduction au travers de l'embouchure d'où elle sort.

Cette réintroduction est prévue pour s'effectuer d'elle-même en profitant de la rigidité relative de la fibre, notamment lorsque celle-ci est par ailleurs fixée par rapport à un emplacement dont on rapproche la cassette, comme cela se passe dans le cas des cassettes 14 dans le coffret 1, lorsqu'une cassette est remise en place après avoir été extraite. De même l'extraction des fibres par traction et la réinsertion par poussée sont prévues avec le casier 16.

## Revendications

1. Dispositif de stockage de fibres optiques, destiné à assurer le stockage sous la forme d'une boucle de réserve d'une surlongueur prévue sur chacune desdites fibres et à permettre l'extraction libre d'une partie de la sur longueur stockée et la réintroduction libre dans la boucle d'une partie extraite excédentairement, caractérisé en ce qu'il est constitué par un casier de stockage, de forme sensiblement parallélépipédique, comportant, pour le casier considéré verticalement :
- deux parois principales verticales en vis-à-vis, dites paroi arrière (11) et paroi avant (19),
- un ensemble de cloisons verticales (18), s'étendant chacune de la paroi arrière à celle avant et ménageant entre elles et lesdites parois arrière et avant une série de cases chacune affectée à la boucle de réserve de l'une des fibres (8), et
- un support horizontal (21), s'étendant dans une partie dite inférieure dudit casier entre lesdites parois arrière et avant mais non jointif avec l'une et l'autre de celles-ci, et auquel sont assujetties les différentes cloisons, présentant un profil semi-cylindrique tourné vers l'intérieur desdites cases et délimitant, d'une part, entre lui, ladite paroi arrière et lesdites cloisons des premiers accès individuels (O) des fibres aux différentes cases, et d'autre part, entre lui, ladite paroi avant et lesdites cloisons des deuxièmes accès individuels des fibres aux différentes cases, ladite paroi avant étant quant à elle amovible de façon à permettre l'accès auxdites cases sur l'avant du casier pour l'insertion initiale de la boucle de réserve dans chacune d'elles.

2. Dispositif selon la revendication 1, caractérisé en ce que une première cloison terminale (18F) dudit ensemble de cloisons présente une partie terminale inférieure et uniquement avant, s'étendant par une portion recourbée depuis l'extrémité dudit support horizontal à laquelle est assujettie ladite première cloison terminale, puis par une portion sensiblement horizontale au moins jusqu'au droit de la deuxième cloison terminale (18E) dudit ensemble de cloisons, en constituant un plancher de conduite (17) au-dessous desdits deuxièmes accès desdites cases, et en ce que ledit support horizontal (21) présente un rebord vertical (20), saillant au-dessous de lui, le long de son bord dit avant, et raccordé au bord correspondant dit arrière dudit plancher, définissant avec ladite paroi avant des parois de ladite conduite, en la délimitant de chaque côté dudit plancher.

3. Dispositif selon la revendication 2, caractérisé en ce que ladite conduite se termine sensiblement au droit de ladite deuxième cloison terminale (18E) par une embouchure au moins partiellement évasée, définie par une courbure de la partie terminale dudit plancher.

4. Dispositif selon l'une des revendications 2 et 3, caractérisé en ce que les cloisons autres que ladite première cloison terminale ont chacune une partie terminale inférieure et dite avant, recourbée sensiblement parallèlement à ladite portion recourbée de ladite première cloison terminale et faisant ainsi sensiblement saillie dans ladite conduite (17), au-dessus dudit plancher.

## Patentansprüche

1. Einrichtung zum Lagern von Lichtleitfasern in Form einer Reserveschleife einer an jeder der Fasern vorgesehenen Überlänge und zur Ermöglichung der freien Entnahme eines Teils der gelagerten Überlänge und der freien Wiedereinführung eines nicht mehr benötigten entnommenen Teils in die Schleife, dadurch gekennzeichnet, daß die Einrichtung aus einem Lagergehäuse von im wesentlichen parallelepipedischer Form besteht, das bei senkrechter Lage des Gehäuses aufweist:
- zwei einander gegenüberliegende, senkrechte, als hintere Wand (11) und vordere Wand (19) bezeichnete Hauptwände,
- eine Gruppe von senkrechten Zwischenwänden (18), die je von der hinteren Wand zur vorderen Wand reichen und die zwischen sich und der hinteren und der vorderen Wand eine Reihe von Fächern bilden, die je für die Reserveschleife einer der Fasern (8) bestimmt sind, und
- einen waagrechten Träger (21), der sich in einem unteren Abschnitt des Gehäuses zwischen der hinteren und der vorderen Wand erstreckt, ohne jedoch an die eine und die andere dieser Wände anzustoßen, und auf der die verschiedenen Zwischenwände befestigt sind, wobei der Träger ein in das Innere der Fächer gewölbtes halbzylindrisches Profil besitzt und einerseits zwischen sich, der hinteren Wand und den Zwischenwänden erste individuelle Eingänge (O) für Fasern zu den verschiedenen Fächern, und andererseits zwischen sich, der vorderen Wand und den Zwischenwänden zweite individuelle Eingänge für Fasern zu den verschiedenen Fächern begrenzt, wobei die vordere Wand abnehmbar ist, derart, daß der Zugang zu den Fächern an der Vorderseite des Gehäuses zum anfänglichen Einschieben der Reserveschleife in jedes der Fächer ermöglicht wird.

2. Einrichtung nach Anspruch 1, dadurch gekennzeichnet, daß eine erste Abschlußwand (18F) der Gruppe der Zwischenwände einen nur vorne vorhandenen unteren Endabschnitt besitzt, der sich durch einen gebogenen Abschnitt vom Ende des waagrechten Trägers, an dem die erste Abschlußwand befestigt ist, über einen im wesentlichen bis in Höhe der zweiten Abschlußwand (18E) der Gruppe der Zwischenwände waagrechten Abschnitt unter Bildung eines Kanalbodens (17) unter den zweiten Eingängen der Fächer erstreckt, und daß der waagrechte Träger (21) einen senkrechten Kragen (20) besitzt, der unter dem Träger entlang von dessen vorderer Kante vorspringt und an der entsprechenden hinteren Kante des Bodens anschließt und mit der vorderen Wand Wände des Kanals definiert, indem sie diesen zu beiden Seiten des Bodens begrenzen.

3. Einrichtung nach Anspruch 2, dadurch gekennzeichnet, daß der Kanal im wesentlichen in Höhe der zweiten Abschlußwand (18E) in einer mindestens teilweise erweiterten Mündung endet, die durch eine Krümmung des Endabschnitts des Bodens definiert wird.

4. Einrichtung nach Anspruch 2 oder 3, dadurch gekennzeichnet, daß die anderen Zwischenwände mit Ausnahme der ersten Abschlußwand jeweils einen unteren, vorderen Endabschnitt besitzen, der im wesentlichen parallel zum gekrümmten Abschnitt der ersten Abschlußwand gekrümmt ist und so im wesentlichen in den Kanal (17) oberhalb des Bodens hineinragt.

## Claims

1. Optical fibre storage device for storing an excess length of fibre in the form of a reserve coil and enabling unrestricted extraction of a part of the excess reserve so stored and unrestricted re-insertion into the coil of a surplus extracted part, characterised in that it comprises a storage rack of substantially parallelepiped-shape comprising, for the rack when disposed vertically:
- facing vertical rear (11) and front (19) main walls,
- a set of vertical partitions (18) each extending from the rear wall to the front wall and forming between them and said front and said rear walls a series of compartments each allocated to the reserve coil of one of the fibres (8), and
- a horizontal support (21) extending in a lower part of said rack between said back and front walls but not joining onto either of the latter and to which are fastened the various compartments, having a semi-cylindrical profile facing towards the interior of said compartments and delimiting between itself, said back wall and said partitions first individual ports (0) of the fibres to the various compartments and between itself, said front wall and said compartments second individual ports of the fibres to the various compartments, said front wall being removable to provide access to said compartments at the front of the rack for the initial insertion of a reserve coil into each of them.

2. Device according to claim 1 characterised in that a first end partition (18F) of said set of partitions has a lower end part at the front only extending via a curved portion from the end of said horizontal support to which said first end partition is attached and then via a substantially horizontal portion at least as far as the second end partition (18E) of said set of partitions, constituting a passage floor (17) under said second ports of said compartments, and in that said horizontal support (21) has a vertical rim (20) projecting under it along said front edge and joined to the corresponding rear edge of said floor defining with said front wall walls of said passage delimiting it on each side of said floor.

3. Device according to claim 2 characterised in that said passage terminates substantially in line with said second end partition (18E) at an least partially flared opening defined by a curved portion of the end part of said floor.

4. Device according to claim 2 or claim 3 characterised in that the partitions other than said first end partition each have a front lower end part curved substantially parallel to said curved portion of said first end partition and consequently projecting substantially into said passage (17) above said floor.
